# EUROPÄISCHE PATENTANMELDUNG

(11) **EP 1 964 476 A2**
(43) Veröffentlichungstag der Anmeldung: **03.09.2008**
(21) Anmeldenummer: 08003334.3
(22) Anmeldetag: 25.02.2008
(51) Int. Cl.: A23G 3/20

(54) **Vorrichtung zum Veredeln von Feingebäck mit Veredelungsmaterialien**

(30) Priorität: 01.03.2007 DE 202007003160 U
(71) Anmelder: Frisch-Spritzmatic GmbH, 89129 Öllingen/Ulm (DE)
(72) Erfinder: Frisch, Jürgen, 89129 Öllingen (DE)
(74) Vertreter: Hentrich, Swen

(57) **Zusammenfassung**

Die Erfindung betriff eine Vorrichtung zum Veredeln von Feingebäck mit Veredelungsmaterialien wie Aprikot, Ei, Fondant, Gelee oder dergleichen, mit einem Behälterkörper (1) sowie einem auf diesem lösbar angeordneten Behälterverschluß (2), die gemeinsam eine mit einem Druckmittel beaufschlagbare Kammer (3) zur Bevorratung des Veredelungsmaterials bilden, und mit einem dem Behälterverschluß (2) zugeordneten, mittels einer Handhabe (4) betätigbaren Ventil (5) zur dosierten Abgabe des Veredelungsmaterials. Zur Aufnahme des Veredelungsmaterials ist eine auswechselbare kompressible Kartusche (6) vorgesehen, die ein Anschlußelement (7) zum druckdichten Anschluß an eine dem Behälterverschluß (2) zugeordnete Anschlußkupplung (8) aufweist.

## Beschreibung

Die Erfindung betrifft eine Vorrichtung zum Veredeln von Feingebäck mit Veredelungsmaterialien wie Aprikot, Ei, Fondant, Gelee oder dergleichen, mit einem Behälterkörper sowie einem auf diesen lösbar angeordneten Behälterverschluß, die gemeinsam eine mit einem Druckmittel beaufschlagbare Kammer zur Bevorratung des Veredelungsmaterials bilden, und mit einem dem Behälterverschluß zugeordneten, mittels einer Handhabe betätigbaren Ventil zur dosierten Abgabe des Veredelungsmaterials.

Das unverwechselbare Äußere und die vollendete Geschmacksnote von Feingebäck ist nicht zuletzt das Ergebnis raffiniert und mit bedacht eingesetzter Veredelungsmaterialien. Die Herstellung exklusiven Feingebäcks erfordert weiterhin den manuellen Arbeitseinsatz geschulter Fachkräfte, wobei gerade für hoch anspruchsvolle Kreationen und hochpreisige Veredelungsmaterialien die am Markt etablierten Großapplikatoren oftmals aufgrund ihrer Füllkapazität und Auslegung für die Massenproduktion nicht in Betracht kommen. Demgegenüber genügen die auf dem Markt weitverbreiteten gattungsgemäßen Vorrichtungen, wie etwa Sahnesiphons oftmals nicht den ergonomischen, wirtschaftlichen und hygienischen Ansprüchen, nachdem die in diesem Bereich verarbeiteten Veredelungsmaterialien oftmals zucker-oder eihaltig sind und somit gegenüber bakterieller Kontamination besonders anfällig sind.

Der Erfindung liegt daher die Aufgabe zugrunde, eine Vorrichtung der eingangs genannten Art so zu verbessern, dass diese die Verarbeitung in kleinen Portionen abgefüllter Veredelungsmaterialien auf besonders ergonomische und flexible Weise erlaubt und zudem besonders hohen hygienischen Anforderungen gerecht wird.

Diese Aufgabe wird nach der Erfindung dadurch gelöst, dass zur Aufnahme des Veredelungsmaterials eine auswechselbare kompressible Kartusche vorgesehen ist, die ein Anschlußelement zum druckdichten Anschluß an eine dem Behälterverschluß zugeordnete Anschlußkupplung aufweist.

Hierdurch können die unterschiedlichen Veredelungsmaterialien auf einfache Weise auch in kleineren Portionen bevorratet werden und für den jeweiligen Gebrauch in die Vorrichtung eingebracht werden. Ein weiter wesentlicher Vorteil besteht darin, dass das jeweilige Veredelungsmaterial keinen direkten Kontakt mit der Innenwandung der Druckkammer hat, so dass sich der Reinigungsprozess der Vorrichtung deutlich vereinfacht und zugleich die Gefahr einer bakteriellen Kontamination deutlich verringert ist.

Als besonders vorteilhaft hat sich erwiesen, dass der Behälterkörper ein Rückschlagventil aufweist, über das der Behälterkörper von außen intermittierend oder kontinuierlich mit einem Druckmittel beaufschlagbar ist. Hierbei kann zur Druckmittelbeaufschlagung eine Gaspatrone oder ein Druckmittelschlauch vorgesehen sein. Der hiermit verbundene Vorteil besteht im wesentlichen darin, dass die Vorrichtung ortsungebunden einsetzbar ist und lediglich zum "Aufladen" des Druckbehälters mit Druckmittel an einen Druckmittelschlauch oder dergleichen angeschlossen werden muß. Weiterhin können natürlich auch handelsübliche Gaspatronen angeschlossen werden oder der Druckmittelschlauch dauerhaft angeschlossen bleiben.

Für eine besonders störunanfällige und vollständige Entleerung der Kartusche ist vorgesehen, dass die Kartusche als Faltenbalg ausgebildet ist, wobei zwischen diesem und dem ersten Rückschlagventil ein axial zu der Längsachse des Behälterkörpers verstellbar angeordneter und luftdicht mit der Innenwandung der Kammer abschließender Stempel angeordnet ist.

Im Hinblick auf die im lebensmittelverarbeitenden Gewerbe besonders hohen Ansprüche an die Lebensmittelhygiene ist es zudem besonders bevorzugt, dass die Kartusche mittels eines Siegels luftdicht verschlossen ist und zum Bruch des Siegels bei Anschluß der Kartusche an die Anschlußkupplung ein Durchstichdorn oder eine Stanze vorgesehen ist. Hierdurch wird sichergestellt, dass der Inhalt bevorrateter Kartuschen erst dann in Kontakt mit der Außenluft und Fremdoberflächen kommt, wenn eine Verarbeitung des in der Kartusche befindlichen Veredelungsmaterials unmittelbar bevorsteht. Besonders vorteilhaft ist eine zum einmaligen Gebrauch vorgesehene Kartusche, da hierbei ein kostenintensiver Reinigungs- und Rückführungsprozess der Kartuschen entfällt.

Als ganz besonders zweckmäßig hat es sich weiterhin erwiesen, dass die Anschlußkupplung eine für die Kartuschen des jeweilig zu verwendenden Veredelungsmaterials spezifische Kodierung aufweist, wodurch nur der Anschluß entsprechend kodierter Kartuschen ermöglicht ist. Vorteilhafterweise ist die Kodierung hierbei durch Paßstifte ermöglicht. Der hiermit verbundene Vorteil besteht im wesentlichen darin, dass eine im Betrieb befindliche Vorrichtung bis zum Austausch der Anschlußkupplung und der damit normalerweise verbundenen Reinigung nur für ein Veredelungsmaterial verwendet werden kann. Eine oftmals unhygienische Vermischung von verschiedenen Veredelungsmaterialien und die sich ergebende geschmackliche Beeinträchtigung kann hierdurch effektiv ausgeschlossen werden.

Vorteilhafterweise weist das Anschlußstück der Kartusche ein Außengewinde auf, das zum Eingriff in ein korrespondierendes Gewinde der Anschlußkupplung des Behälterverschlusses vorgesehen ist.

Für eine möglichst weitgehende Entleerung der Kartusche weist die Kartusche in ihrem Inneren ein mit dem Anschlußstück verbundenes Steigrohr auf.

Für eine besonders einfache, sichere und einen schnellen Zugang zu den zu reinigenden Teilen der Vorrichtung ist es ganz besonders bevorzugt, dass der Behälterverschluß mittels Schraub- oder Bajonettanschluß auf dem Behälterkörper angeordnet ist.

Im Rahmen der Erfindung weiterhin vorgesehen ist es, dass zur Abgabe des Veredelungsmaterials vorgesehene Ventil als ein mit der Kraft einer Druckfeder beaufschlagtes Rückschlagventil auszubilden, das mittels einer lösbaren Ventilverschlußschraube in seinem Lager im Behälterverschluß gehalten ist. Diese denkbar einfache Konstruktionsweise ermöglicht eine besonders einfache, schnelle und rückstandsfreie Reinigung der mit dem Veredelungsmittel in Kontakt kommenden Bauteile. Darüber hinaus zeichnet sich dieser Aufbau durch seine robuste Langlebigkeit, verbunden mit einem geringem Wartungsaufwand aus.

Weiter kann im Rahmen der Erfindung die Vorrichtung zweckmäßigerweise so gewählt werden, dass der Behälterverschluß aus massivem Aluminium gebildet ist. Abgesehen von der hiermit erreichten edlen Optik und Haptik erlaubt dieses lebenssmittelechte Material eine besonders einfache Reinigung bei besonders hoher Langlebigkeit.

Im folgenden wird die Erfindung an einem in der Zeichnung dargestellten Ausführungsbeispiel näher erläutert; es zeigt:

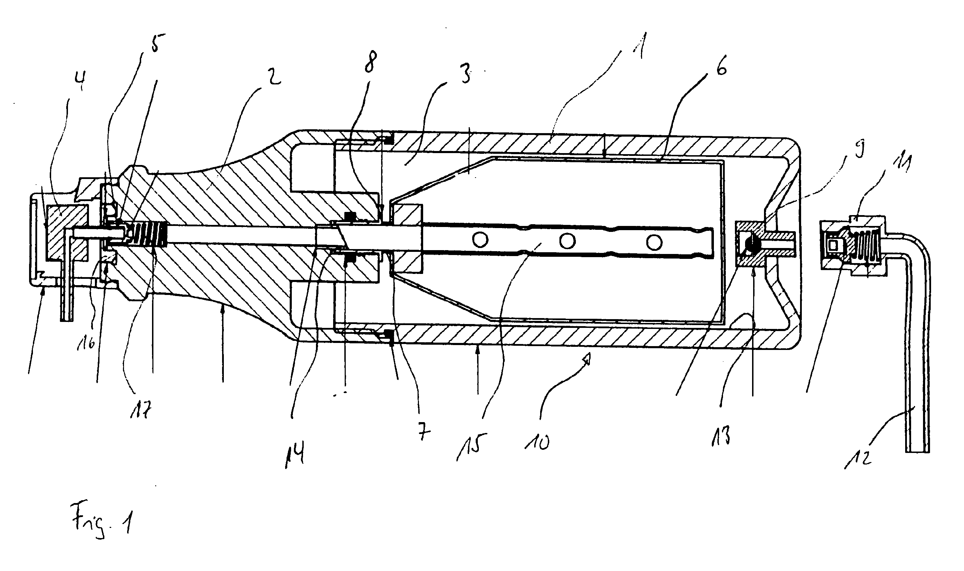

Fig. 1 eine erfindungsgemäße Vorrichtung im Längsschnitt.

In der Zeichnung ist eine Vorrichtung zum Veredeln von Feingebäck mit Veredelungsmaterialien wie Aprikot, Ei, Fondant, Gelee oder dergleichen dargestellt.

Die Vorrichtung weist einen Behälterkörper 1 auf, sowie einen auf diesem lösbar angeordneten Behälterverschluß 2, die gemeinsam eine mit einem Druckmittel beaufschlagbare Kammer 3 zur Bevorratung des Veredelungsmaterials bilden. Dem Behälterverschluß 2 ist ein mittels einer Handhabe 4 betätigbares Ventil 5 zur dosierten Abgabe des Veredelungsmaterials zugeordnet. Zur Aufnahme des Veredelungsmaterials ist eine auswechselbare und kompressible Kartusche 6 vorgesehen, die ein Anschlußelement 7 zum druckdichten Anschluß an die dem Behälterverschluß 2 zugeordnete Anschlußkupplung 8 aufweist. Der Behälterkörper weist ein Rückschlagventil 9 auf, über das der durch den Behälterverschluß und den Behälterkörper gebildete Druckbehälter 10, von außen intermittierdend oder aber kontinuierlich mit einem Druckmittel beaufschlagbar ist. Hierzu kann das Anschlußelement 11 des ebenfalls in der Zeichnung dargestellten Druckmittelschlauches 12 an das Rückschlagventil 9 angeschlossen werden. Nach Aufladen des Druckbehälters 10 ist die Möglichkeit gegeben, die Vorrichtung auch bei abgekoppelten Anschlußstück 11 des Druckmittelschlauchs 12 zu verwenden. Alternativ kann natürlich auch eine Druckmittelbeaufschlagung mittels einer in der Zeichnung nicht näher dargestellten Gaspatrone erzielt werden.

Gemäß einer in der Zeichnung nicht dargestellten weiteren Ausführungsform kann die Kartusche 6 auch als Faltenbalg ausgebildet sein, wobei zwischen diesem und dem Rückschlagventil dann ein axial zu der Längsachse des Behälterkörpers 1 verstellbar angeordneter und luftdicht mit der Innenwandung 13 der Kammer 3 abschließender Stempel angeordnet ist. Zur vereinfachten Abschätzung des in der Kartusche 6 verbleibenden Veredelungsmittels ist ein zumindest teilweise optisch durchsichtiger Behälterkörper im Rahmen der Erfindung leicht vorstellbar.

Die in der Zeichnung dargestellte Kartusche 6 ist mittels eines hier nicht näher dargestellten Siegels zunächst luftdicht verschlossen. Der Bruch des Siegels erfolgt erst bei Anschluß der Kartusche 6 an die Anschlußkupplung 8 durch den Folienaufstecher 14. Die Anschlußkupplung 8 weist in hier nicht näher dargestellter Weise eine für die Kartuschen 6 des jeweils verwendeten Veredelungsmaterials spezifische Kodierung auf, die durch Paßstifte ermöglicht ist. Das Anschlußstück 7 der Kartusche 6 ist in hier nicht näher dargestellter Weise mit einem Außengewinde versehen, dass zum Eingriff in ein ebenfalls nicht näher dargestelltes korrespondierende Gewinde der Anschlußkupplung 8 des Behälterverschlusses 2 vorgesehen ist. Die Kartusche 6 weist in ihrem Innern ein mit dem Anschlußstück 7 verbundenes Steigrohr 15 auf. Um eine besonders einfache Reinigung zu ermöglichen, ist der Behälterverschluß 2 mittels eines Schraubverschlusses auf dem Behälterkörper 1 angeordnet. Das Abgabeventil ist mittels einer lösbaren Ventilverschlußschraube 16 in seinem Lager im Behälterverschluß 2 gehalten ist. Der Behälterverschluß 2 ist, wie aus der Zeichnung ersichtlich, aus einem massiven Material, hier Aluminium, gefertigt.

## Patentansprüche

1. Vorrichtung zum Veredeln von Feingebäck mit Veredelungsmaterialien wie Aprikot, Ei, Fondant, Gelee oder dergleichen, mit einem Behälterkörper (1) sowie einem auf diesem lösbar angeordneten Behälterverschluß (2), die gemeinsam eine mit einem Druckmittel beaufschlagbare Kammer (3) zur Bevorratung des Veredelungsmaterials bilden, und mit einem dem Behälterverschluß (2) zugeordneten, mittels einer Handhabe (4) betätigbaren Ventil (5) zur dosierten Abgabe des Veredelungsmaterials, **dadurch gekennzeichnet, daß** zur Aufnahme des Veredelungsmaterials eine auswechselbare kompressible Kartusche (6) vorgesehen ist, die ein Anschlußelement (7) zum druckdichten Anschluß an eine dem Behälterverschluß (2) zugeordnete Anschlußkupplung (8) aufweist.

2. Vorrichtung nach Anspruch 1, **dadurch gekennzeichnet, daß** der Behälterkörper (1) ein Rückschlagventil (9) aufweist, über das der Behälterkörper (1) von außen intermittierend oder kontinuierlich mit einem Druckmittel beaufschlagbar ist.

3. Vorrichtung nach Anspruch 2, **dadurch gekennzeichnet, daß** zur Druckmittelbeaufschlagung eine Gaspatrone oder ein Druckmittelschlauch (12) vorgesehen ist.

4. Vorrichtung nach Anspruch 1, **dadurch gekennzeichnet, daß** die Kartusche (6) als Faltenbalg ausgebildet ist, wobei zwischen diesem und dem Rückschlagventil (9) ein axial zu der Längsachse des Behälterkörpers (1) verstellbar angeordneter und luftdicht mit der Innenwandung (13) der Kammer (3) abschließender Stempel angeordnet ist.

5. Vorrichtung nach einem der Ansprüche 1 bis 4, **dadurch gekennzeichnet, daß** die Kartusche (6) mittels eines Siegels luftdicht verschlossenen ist und zum Bruch des Siegels bei Anschluss der Kartusche (6) an die Anschlußkupplung (8) ein Durchstichdorn (14) oder eine Stanze (14) vorgesehen ist.

6. Vorrichtung nach einem der Ansprüche 1 bis 5, **dadurch gekennzeichnet, daß** die Kartusche (6) zum einmaligen Gebrauch vorgesehen ist.

7. Vorrichtung nach Anspruch 1, **dadurch gekennzeichnet, daß** die Anschlußkupplung (8) eine für die Katuschen (6) des jeweilig zu verwendenden Veredelungsmaterials spezifische Kodierung aufweist, wodurch nur der Anschluß entsprechend kodierter Kartuschen (6) ermöglicht ist.

8. Vorrichtung nach Anspruch 2, **dadurch gekennzeichnet, daß** die Codierung durch Paßstifte ermöglicht ist.

9. Vorrichtung nach einem der Ansprüche, **dadurch gekennzeichnet, daß** das Anschlußstück (7) der Kartusche (6) ein Außengewinde aufweist, das zum Eingriff in ein korrespondierendes Gewinde der Anschlußkupplung (8) des Behälterverschlusses (2) vorgesehen ist.

10. Vorrichtung nach einem der Ansprüche, **dadurch gekennzeichnet, daß** die Kartusche (6) in ihrem Inneren ein mit dem Anschlußstück (7) verbundenes Steigrohr (15) aufweist.

11. Vorrichtung nach Anspruch, **dadurch gekennzeichnet, daß** der Behälterverschluß (2) mittels Schraub- oder Bajonettanschluß auf dem Behälterkörper (1) angeordnet ist.

12. Vorrichtung nach einem der Ansprüche, **dadurch gekennzeichnet, daß** das zur Abgabe des Veredelungsmaterials vorgesehene Ventil (5) als ein mit der Kraft einer Druckfeder (17) beaufschlagtes Rückschlagventil ausgebildet ist, das mittels einer lösbaren Ventilverschlußschraube (16) in seinem Lager im Behälterverschluß (2) gehalten ist.

13. Vorrichtung nach einem der Ansprüche, **dadurch gekennzeichnet, daß** der Behälterverschluß (2) aus massiven Aluminium gebildet ist.
